# EUROPÄISCHE PATENTANMELDUNG

(11) **EP 2 820 955 A1**
(43) Veröffentlichungstag der Anmeldung: **07.01.2015**
(21) Anmeldenummer: 14173286.7
(22) Anmeldetag: 20.06.2014
(51) Int. Cl.: A22C 11/12, A22C 15/00

(54) **Vorrichtung und Verfahren zum Einführen von Schlaufen**

(30) Priorität: 02.07.2013 DE 202013005914 U
(71) Anmelder: Tipper Tie technopack GmbH, 21509 Glinde (DE)
(72) Erfinder: Aderhold, Uwe, 21529 Kröppelshagen (DE)
(74) Vertreter: Glawe, Delfs, Moll

(57) **Zusammenfassung**

Die Erfindung betrifft eine Vorrichtung zum Einführen von Schlaufen (5a,5b) in die Bewegungsbahn von Clips einer Clipmaschine, eine Clipmaschine mit einer solchen Vorrichtung, ein System aus einer solchen Clipmaschine und mindestens einer Schlaufe sowie ein Verfahren zum Einführen einer Schlaufe in die Bewegungsbahn eines Clips in einer Clipmaschine. Die Erfindung befasst sich mit dem technischen Problem, die Schlaufe nach dem Einführen und vor der Erfassung durch einen Clip möglichst gut zu stabilisieren. Sie löst dieses Problem durch Anordnung einer Halteeinrichtung für die Schlaufen jenseits eines Abschnitts (4a,4b) des zugeführten Clips.

## Beschreibung

Die Erfindung betrifft eine Vorrichtung nach dem Oberbegriff nach Patentanspruch 1.

Clipmaschinen kommen insbesondere bei der Wurstherstellung zum Einsatz, wenn die Wurstenden nicht durch Abdrehen, sondern durch Verschlusselemente (Clips) verschlossen werden sollen. Sollen die Würste aufhängbar sein, müssen Schlaufen zum Aufhängen in den Clipverschluss eingebracht werden. Die Schlaufen sind in der Regel auf einem flachen Trägerband magaziniert, mit dem sie in die Nähe der Bewegungsbahn der Clips transportiert werden. Dort wird das Trägerband so um eine Rolle oder Kante umgelenkt, dass ein Abschnitt der vordersten Schlaufe übersteht. Dieser Abschnitt wird dann vom Clip bei dessen Bewegung zur Verschlussposition erfasst, so dass der Clip die Schlaufe mitnimmt und dabei vom Trägerband löst.

Die begrenzte Formstabilität der Schlaufen setzt der Prozesssicherheit solcher Vorrichtungen Grenzen. Denn Schlaufenabschnitte können nicht vorgesehene Bewegungen ausführen, wodurch die Schlaufe u. U. vom Clip nicht richtig erfasst wird oder sich an Maschinenelementen verhakt. Um diesem Problem zu begegnen, sind zur Einschränkung der Bewegungsfreiheit der Schlaufen schon Niederhalteeinrichtungen vorgeschlagen worden, die die Schlaufen beim Abnehmen vom Trägerband fixieren (DE 10 2009 011 723 A1).

Diese Niederhalteeinrichtungen fixieren die Schlaufe jedoch nur dort, wo ihre Bewegungsfreiheit ohnedies weitest gehend eingeschränkt ist, nämlich auf dem Trägerband. Wird anstelle des Trägerbands ein Luftstrom zum Transport der Schlaufen eingesetzt (vgl. DE 20 2009 007 887 U1), müsse eine solche Halteeinrichtung den richtigen Schlaufenabschnitt während der Zuführbewegung erfassen, was konstruktiv außerordentlich schwierig ist.

Bekannt ist auch, die in Clipmaschinen üblicherweise zum Einschnüren des Wurstdarms vorhandenen Verdränger zum Transport der Schlaufen einzusetzen (z. B. DE 34 30 030 A1). Die Schlaufen werden dann nicht in die Bewegungsbahn des Clips, sondern direkt zur Verschlussposition geführt. Dies legt jedoch die Anfangsposition der Verdrängerbewegung auf die Übergabestelle der Schlaufen fest. Der Hub der Verdränger kann daher nicht bei kleineren Wurstkalibern verringert werden. Dies steht dem Ziel entgegen, möglichst flexible und zugleich schnelle Clipmaschinen zu schaffen.

Der Erfindung liegt die Aufgabe zugrunde, eine effektive Schlaufenstabilisierung zu schaffen, die insbesondere auch für per Luftstrom zugeführte Schlaufen in einfacher Weise realisierbar ist. Sie löst diese Aufgabe durch die Merkmale des Patentanspruchs 1. Die Unteransprüche enthalten vorteilhafte Weiterbildungen der Erfindung.

Eine Bewegungsbahn von Clips im Sinne der Erfindung ist diejenige Bahn, auf der die Clips zur Verschlussposition transportiert werden, nicht aber die Verschlussposition selbst. Die Bewegungsbahn kann geradlinig oder gekrümmt, insbesondere kreisbogenförmig, sein. Im Regelfall liegt die Bewegungsbahn aber innerhalb einer Ebene. Sie kann sowohl für vereinzelte Clips oder für solche Clips geeignet sein, die erst an der Verschlussstelle von einem Clipstrang getrennt werden. Bevorzugt eignet sich die Erfindung aber für Clipmaschinen, die vereinzelte Clips verarbeiten, da hier die Problematik ungewollter Schlaufenbewegungen besonders akut ist.

Die Zuführbahn für die Schlaufen kann ebenfalls linear oder gekrümmt, insbesondere kreisbogenförmig, sein. Im Regelfall liegt auch die Zuführbahn innerhalb einer Ebene. Vorzugsweise ist sie aber linear, da dies konstruktiv einfacher ist.

Eine Halteeinrichtung ist dadurch gekennzeichnet, dass sie die Bewegungsfreiheit zumindest eines Schlaufenabschnitts unabhängig vom Kontakt der Schlaufe mit einem Clip einschränkt. Der Clip selbst ist also keine Halteeinrichtung. Bei der Erfindung kommt es darauf an, dass die Bewegungsfreiheit der Schlaufe unabhängig von einem Kontakt mit dem Clip eingeschränkt wird. Vorzugsweise wirkt die Halteeinrichtung, bevor die Schlaufe mit dem Clip in Kontakt tritt. Die Halteeinrichtung kann insbesondere mechanische Mittel zur Einschränkung der Bewegungsfreiheit aufweisen. Diese können insbesondere Klemmeinrichtungen wie bei vorbekannten Niederhalteeinrichtungen umfassen. Vorteilhafterweise wirkt die Halteeinrichtung jedoch ohne relativ zueinander zu bewegende Teile, da dann auf entsprechende Antriebe verzichtet werden kann.

Mit dem Verlassen der Führungsbahn ist gemeint, dass zumindest ein Schlaufenabschnitt eine Bewegung vollführt, die nicht mehr durch die Antriebsmittel, also insbesondere Transportband oder Luftstrom, für den Transport entlang der Zuführrichtung bedingt ist. Im Regelfall ist dies der Clip, der mit einem Schlaufenabschnitt in Kontakt tritt und diesen in seiner Bewegungsrichtung mitnimmt. Um diesen Teil des Prozesses sicherer zu gestalten, muss die Halteeinrichtung in diesem Moment stabilisierend auf die Schlaufe einwirken.

Ein Clipabschnitt ist ein Teil des Clips, der einen Schlaufenabschnitt hintergreifen kann. Im Regelfall ist dies ein Clipschenkel eines U- oder V-förmigen Clips.

Mit der erfindungsgemäßen Anordnung der Halteeinrichtung ist der Bereich gemeint, wo die Halteeinrichtung auf die Schlaufe einwirkt. Wenn die Halteeinrichtung, insbesondere aus konstruktiven Gründen, Komponenten aufweist, die in Zuführrichtung vor dem Clipabschnitt liegen, ist das unschädlich, solange der Ort der Einwirkung jenseits des Abschnitts liegt. Wenn die Halteeinrichtung zusätzlich vor dem Abschnitt wirkt oder dort eine zweite Halteeinrichtung vorhanden ist, ist das unschädlich.

Damit wirkt die Halteeinrichtung gerade auf den vorlaufenden, hinter den Clipabschnitt ragenden Abschnitt der Schlaufe. Die Erfindung beruht auf der Erkenntnis, dass gerade dieser Abschnitt im Regelfall bei unkontrollierten Bewegungen der Schlaufe die größte Auslenkung erfährt. Gerade dort ist deshalb eine Halterung am effektivsten.

Schlaufen für die Erfindung sind bevorzugt solche, die zum Aufhängen von Würsten und anderen mit Clipverschluss verschlossenen Gegenständen mit mindestens 500g Gewicht geeignet sind.

Vorteilhafterweise ist die Halteeinrichtung in Zuführrichtung jenseits des Clips, also jenseits sämtlicher Clipabschnitte, angeordnet. Dies ist gleichbedeutend mit einer Anordnung der Halteeinrichtung jenseits der Bewegungsbahn der Clips. Dies ist insbesondere dann sinnvoll, wenn die Schlaufe einen Knoten aufweist und dieser unter einen Clipabschnitt, insbesondere den Cliprücken von U-förmigen Clips, geschoben wird. Diese Anbringung von Schlaufen ist besonderes für schwere Würste geeignet (DE 1 803 353 A1). Als Knoten kommt auch eine anderweitige Verdickung des Schlaufenmaterials in Betracht.

Vorzugsweise ist die Halteeinrichtung zur Aufnahme eines Knotens der Schlaufe eingerichtet. Diese Ausführung ist besonders für die Schlaufenzufuhr mit vorlaufendem Schlaufenknoten geeignet. Aufgrund seines Gewichts neigt ein vorlaufender Knoten besonders leicht zum ungewollten Verlassen seiner Zufuhrbahn, so dass sich die Vorteile der Erfindung hier besonders zeigen.

Weiter ist es vorteilhaft, wenn die Halteeinrichtung eine Öffnung umfasst, die zumindest in Bewegungsrichtung der Clips sowie in beiden Richtungen senkrecht zu einer Ebene, die diese Bewegungsrichtung sowie die Zuführrichtung aufspannen, begrenzt ist. Eine Öffnung ist konstruktiv leicht auszuführen. Die genannten Richtungen sind diejenigen, in denen in erster Linie eine Stabilisierung erforderlich ist, insbesondere wenn sich der Clip in Richtung der Schwerkraft bewegt. Noch vorteilhafter ist es in diesen Fällen, wenn die Öffnung auch in der Richtung entgegen der Bewegungsrichtung der Clips begrenzt ist, da dann auch ein Ausbrechen der Schlaufe in dieser Richtung unterbunden wird. Schließlich ist es noch vorteilhafter, wenn die Öffnung in sämtliche Richtungen senkrecht zur Zuführrichtung umgrenzt ist. Die Öffnung weist in diesem Fall eine Berandung in sämtliche Richtungen senkrecht zur Zuführrichtung auf und hält die Schlaufe so sicher in Position.

Vorteilhafterweise ist die Zuführbahn ein Luftkanal. In diesem Fall wirkt sich die Halteeinrichtung besonders aus, da die Halteeinrichtung das einzige die Schlaufe stabilisierende Element ist. In diesem Fall ist es besonders vorteilhaft, wenn die Halteeinrichtung einen am Ende offenen Luftkanal umfasst. Die Schlaufe wird dann einfach von einem Luftkanal in den anderen übergeben. Durch das geöffnete Ende des Luftkanals der Halteeinrichtung wird ein Luftstau und damit ein Abriss der Luftströmung im Übergabebereich vermieden. Besonders prozesssicher ist die Übergabe, wenn der Luftkanal der Halteeinrichtung parallel zum Luftkanal der Zuführbahn verläuft.

Vorteilhafterweise umfasst die Halteeinrichtung Mittel zum Stabilisieren der Schlaufe in einer bestimmten Winkelposition in der Ebene senkrecht zur Zuführrichtung. Dies kann im Fall einer Öffnung oder Bohrung eine Abweichung von der Kreisform sein, so dass die Öffnung bzw. Bohrung eine Längserstreckung erhält, in der die Schlaufe dann gehalten wird. Vorzugsweise ist die Umrandung der Öffnung bzw. Bohrung in Richtung der Längserstreckung konvergierend, etwa durch Ausgestaltung als Ellipse, so dass die Schlaufe bei abweichender Winkelstellung in diese Winkelstellung gebracht werden kann.

Vorzugsweise ist die Halteeinrichtung in einer in der Clipmaschine beweglichen Transporteinheit für Clips. In diesem Fall ist die Erfindung konstruktiv besonders einfach auszuführen. Dies gilt besonders dann, wenn die Transporteinheit zum Transport vereinzelter Clips eingerichtet ist.

Wenn die Position der Halteeinrichtung entlang der Zuführrichtung verstellbar ist, kann die erfindungsgemäße Vorrichtung an verschiedene Schlaufengrößen und/oder ggf. Knotengrößen angepasst werden. Zur sicheren Festlegung des Haltepunkts der Schlaufen ist es ebenfalls vorteilhaft, wenn die Halteeinrichtung einen Tiefenanschlag in Zuführrichtung umfasst. Wenn obendrein die Lage des Tiefenanschlags in Zuführrichtung verstellbar ist, ist wiederum die genannte Anpassungsmöglichkeit gegeben.

Die Erfindung betrifft ferner eine Clipmaschine mit einer vorbeschriebenen Vorrichtung sowie ein System aus einer solchen Clipmaschine und mindestens einer Schlaufe. Im letzteren Fall ist es besonders vorteilhaft, wenn die Schlaufe elastisch und so bemessen ist, dass sie in einer Öffnung der Halteeinrichtung klemmend gehalten werden kann. Es wird dann eine besonders hohe Positionsgenauigkeit bei sehr einfacher Konstruktion erzielt.

Die Erfindung betrifft auch ein Verfahren zum Einführen einer Schlaufe in die Bewegungsbahn eines Clips in einer Clipmaschine mit folgenden Schritten:
- Zuführen der Schlaufe entlang einer Zuführrichtung in die Bewegungsbahn des Clips,
- Halten der Schlaufe an einer Position, die in Zuführrichtung jenseits eines Clipabschnitts liegt.

Vorteilhafterweise erfolgt das Halten unter Klemmung der Schlaufe mittels ihrer eigenen Elastizität ohne anderweitig bewegte mechanische Teile.

Vorzugsweise erfolgt das Zuführen mittels eines Luftstroms.

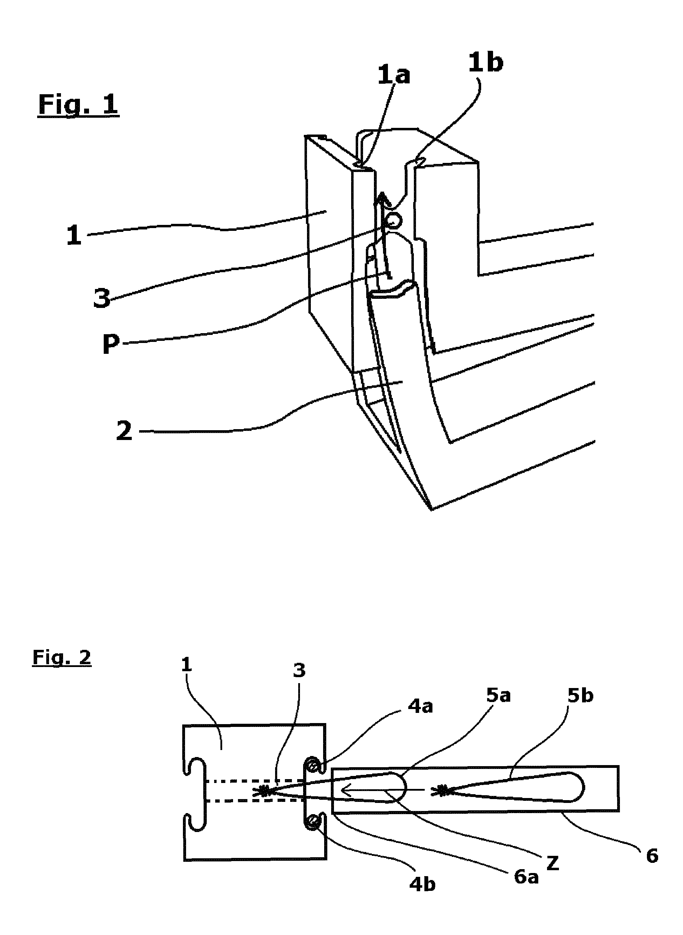

Nachfolgend werden Ausführungsbeispiele der Erfindung anhand von Zeichnungen näher erläutert. Es zeigen
- Fig. 1:: eine schematische perspektivische Ansicht einer Transporteinheit für Clips mit einer erfindungsgemäßen Halteeinrichtung nach einem ersten Ausführungsbeispiel;
- Fig. 2:: eine schematische Draufsicht auf die Transporteinheit mit einer Schlaufenzuführung;
- Fig. 3:: eine schematische perspektivische Ansicht einer Transporteinheit nach einem zweiten Ausführungsbeispiel;
- Fig. 4:: eine schematische Schnittansicht eines dritten Ausführungsbeispiels.

Die dargestellte Transporteinheit 1 ist aus der EP 2 258 622 B1 bekannt. Zur Aufnahme eines Clips weist sie zwei Nuten 1a, 1b auf, in die ein Clip mit kreisförmigen Schenkelprofilen 4a, 4b klemmend eingeführt werden kann. Den so eingeklemmten Clip bewegt die Transporteinheit 1 entlang der durch den Pfeil P gekennzeichneten Bewegungsbahn für den Clip. Das Einschieben des Clips in die Nuten 1a, 1b sowie auch das Herausschieben beim Verschließen erfolgt mittels eines Stempels 2, der auf den Cliprücken drückt und sich durch die von den Nuten 1a, 1b gebildete Öffnung schieben kann.

Zwischen den Nuten 1a, 1b befindet sich eine Bohrung 3, die mit ihrer allseits berandeten Öffnung eine Halteeinrichtung für Schlaufen bildet. Die Bohrung 3 bildet zugleich einen Luftkanal, in den die Schlaufen 5a, 5b von einem Zufuhrluftkanal 6 an dessen Ende 6a übergeben werden. Die Zuführrichtung ist durch den Pfeil Z gekennzeichnet. Die Bohrung 3 ist zwar durchgehend, um eine Aufstauung der Luft und damit einen Abriss der Strömung im Übergabebereich zu verhindern. Sie ist aber enger als der Zufuhrluftkanal 6, so dass die Schlaufen 5a, 5b in der Bohrung 3 stecken bleiben. Infolge ihrer Elastizität kommt es zur Einklemmung der Schlaufen 5a, 5b, ohne dass es dafür mechanisch bewegter Komponenten bedarf.

Anstelle des Zufuhrluftkanals kann auch ein Transportband verwendet werden, dass bei 6a scharf umgelenkt wird. Die Schlaufen 5a, 5b sind dann an ihren in Zuführrichtung Z hinteren Enden so auf dem Band befestigt, dass ihre Knoten vorauseilen, ohne die Umlenkbewegung mitzumachen. Die Knoten werden daher in die Bohrung 3 eingeführt, so dass die vom Clip zu erfassenden Schlaufenabschnitte in Position gehalten werden.

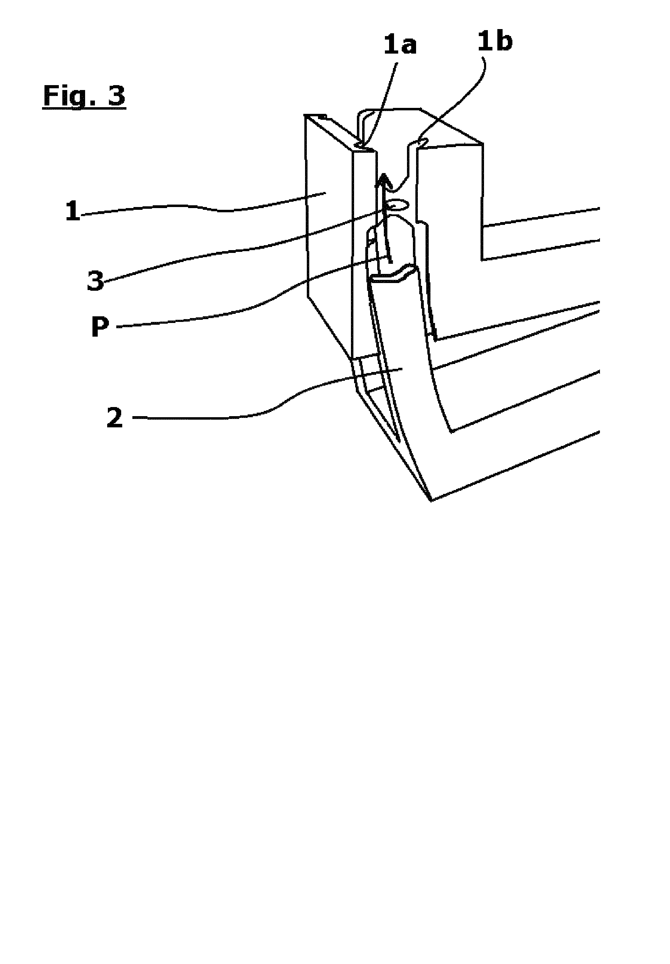

Bei der Ausführungsform nach Fig. 3 sind Mittel zum Stabilisieren der Schlaufe in einer bestimmten Winkelposition in der Ebene senkrecht zur Zuführrichtung vorhanden, und zwar in Gestalt einer elliptischen Öffnung der Bohrung.

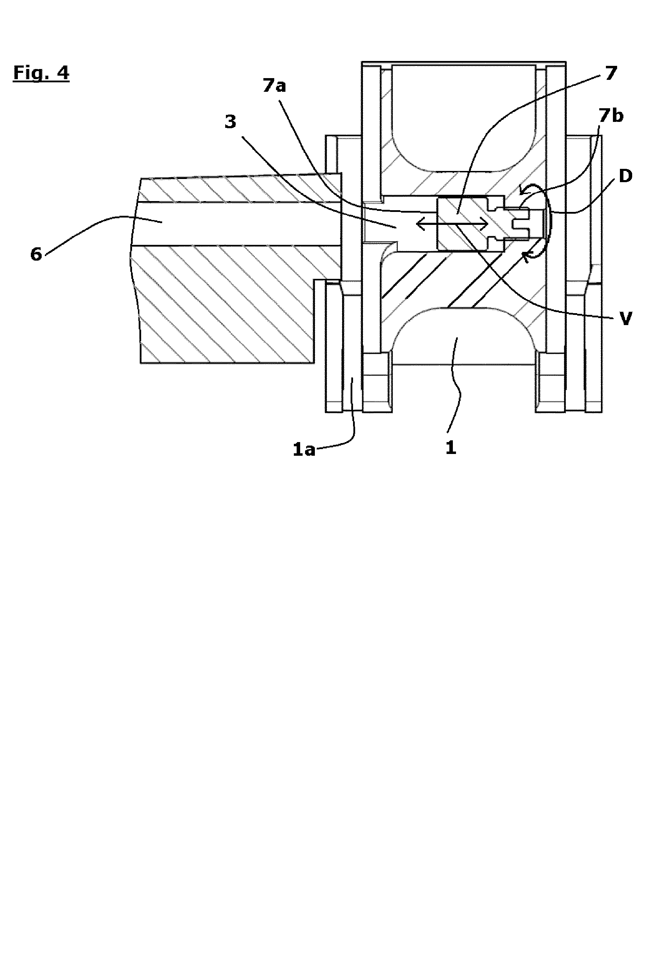

Fig. 4 zeigt eine Ausführungsvariante, bei der die Halteeinrichtung einen Tiefenanschlag 7 aufweist, der in der Bohrung 3 längsverschieblich gelagert ist. An seiner den zugeführten Schlaufen 5a, 5b zugewandten Seite weist er eine Anschlagfläche 7a auf und an der abwandten Seite eine Gewindeverbindung 7b zum Einstellen der Position der Anschlagfläche 7a entlang der Zuführrichtung Z. Im Ausführungsbeispiel ist der Verbindungspartner der Gewindeverbindung 7b ein Teil einer Transporteinheit 1. Durch Drehung des Anschlags 7 in Richtung des Pfeils D kann er also entlang des Pfeils V verstellt werden. Hierdurch ist die Anpassung der Halteeinrichtung an verschiedene Schlaufengrößen oder ggf. auch verschiedene Knotenlängen möglich.

## Patentansprüche

1. Vorrichtung zum Einführen von Schlaufen in die Bewegungsbahn von Clips einer Clipmaschine mit einer in die Bewegungsbahn ragenden Zuführbahn, entlang derer die Schlaufen (5a, 5b) in einer Zuführrichtung (Z) zugeführt werden können, und einer Halteeinrichtung zum Halten der Schlaufen (5a, 5b) beim Verlassen der Führungsbahn, **dadurch gekennzeichnet, dass** die Halteeinrichtung in Zuführrichtung (Z) jenseits eines Clipabschnitts (4a, 4b) angeordnet ist.

2. Vorrichtung nach Patentanspruch 1, **dadurch gekennzeichnet dass** die Halteeinrichtung in Zuführrichtung (Z) jenseits des Clips angeordnet ist.

3. Vorrichtung nach einem der vorgenannten Patentansprüche, **dadurch gekennzeichnet, dass** die Halteeinrichtung zur Aufnahme eines Knotens der Schlaufe (5a, 5b) eingerichtet ist.

4. Vorrichtung nach einem der vorgenannten Patentansprüche, **dadurch gekennzeichnet, dass** die Halteeinrichtung eine Öffnung umfasst, die zumindest in Bewegungsrichtung der Clips sowie in beiden Richtungen senkrecht zu einer Ebene, die diese Bewegungsrichtung sowie die Zuführrichtung (Z) aufspannen, begrenzt ist.

5. Vorrichtung nach Patentanspruch 4, **dadurch gekennzeichnet, dass** die Öffnung auch in der Richtung entgegen der Bewegungsrichtung (P) der Clips begrenzt ist.

6. Vorrichtung nach Patentanspruch 5, **dadurch gekennzeichnet, dass** die Öffnung in sämtliche Richtungen senkrecht zur Zuführrichtung (Z) umgrenzt ist.

7. Vorrichtung nach einem der vorstehenden Patentansprüche, **dadurch gekennzeichnet, dass** die Zuführbahn ein Luftkanal (6) ist.

8. Vorrichtung nach Patentanspruch 7, **dadurch gekennzeichnet, dass** die Halteeinrichtung einen am Ende offenen Luftkanal umfasst.

9. Vorrichtung nach Patentanspruch 8, **dadurch gekennzeichnet, dass** der Luftkanal der Halteeinrichtung parallel zum Luftkanal (6) der Zuführbahn verläuft.

10. Vorrichtung nach einem der vorstehenden Patentansprüche, **dadurch gekennzeichnet, dass** die Halteeinrichtung Mittel zum Stabilisieren der Schlaufe (5a, 5b) in einer bestimmten Winkelposition in der Ebene senkrecht zur Zuführrichtung (Z) umfasst.

11. Vorrichtung nach einem der vorstehenden Patentansprüche, **dadurch gekennzeichnet, dass** die Halteeinrichtung in einer in der Clipmaschine beweglichen Transporteinheit (1) für Clips angeordnet ist.

12. Vorrichtung nach Patentanspruch 8, **dadurch gekennzeichnet, dass** die Transporteinheit (1) zum Transport vereinzelter Clips eingerichtet ist.

13. Vorrichtung nach einem der vorgenannten Patentansprüche, **dadurch gekennzeichnet, dass** die Position der Halteeinrichtung entlang der Zuführrichtung (Z) verstellbar ist.

14. Vorrichtung nach einem der vorgenannten Patentansprüche, **dadurch gekennzeichnet, dass** die Halteeinrichtung einen Tiefenanschlag (7) in Zuführrichtung (Z) umfasst.

15. Vorrichtung nach Patentanspruch 14, **dadurch gekennzeichnet, dass** die Lage des Tiefenanschlags (7) in Zuführrichtung (Z) verstellbar ist.

16. Clipmaschine mit einer Vorrichtung nach einem der Ansprüche 1 bis 15.

17. System aus einer Clipmaschine nach Anspruch 16 und mindestens einer Schlaufe.

18. System nach Anspruch 17, **dadurch gekennzeichnet, dass** die Schlaufe (5a, 5b) elastisch und so bemessen ist, dass sie in einer Öffnung der Halteeinrichtung klemmend gehalten werden kann.

19. Verfahren zum Einführen einer Schlaufe (5a, 5b) in die Bewegungsbahn eines Clips in einer Clipmaschine mit dem Schritt:
- Zuführen der Schlaufe (5a, 5b) entlang einer Zuführrichtung in die Bewegungsbahn des Clips, **gekennzeichnet durch** folgenden weiteren Schritt:
- Halten der Schlaufe (5a, 5b) an einer Position, die in Zuführrichtung jenseits eines Clipabschnitts (4a, 4b) liegt.

20. Verfahren nach Patentanspruch 19, **dadurch gekennzeichnet, dass** das Halten unter Klemmung der Schlaufe (5a, 5b) mittels ihrer eigenen Elastizität ohne anderweitig bewegte mechanische Teile erfolgt.
